# EUROPEAN PATENT SPECIFICATION

(11) **EP 4 268 098 B1**
(45) Date of publication and mention of the grant of the patent: **07.10.2026**
(21) Application number: 21830841.9
(22) Date of filing: 29.11.2021
(51) Int. Cl.: G06F 21/16, G06F 21/57

(54) **CORRELATION BETWEEN SOURCE CODE REPOSITORIES AND WEB ENDPOINTS**
KORRELATION ZWISCHEN QUELLCODESPEICHERN UND WEBENDPUNKTEN
CORRÉLATION ENTRE DES RÉFÉRENTIELS DE CODE SOURCE ET DES POINTS D'EXTRÉMITÉ WEB

(30) Priority: 22.12.2020 US 202017131540
(43) Date of publication of application: 01.11.2023
(73) Proprietor: Microsoft Technology Licensing, LLC, Redmond, WA 98052-6399 (US)
(72) Inventor: HENDRICKX, Michael, Redmond, Washington 98052-6399 (US); KHAN, Safwan Mahmud, Redmond, Washington 98052-6399 (US)
(74) Representative: Grünecker Patent- und Rechtsanwälte PartG mbB
(86) International application number: PCT/US2021/060908
(87) International publication number: WO 2022/140014

(56) References cited:
- CN-A- 109 657 208
- US-A1- 2020 153 850

## Description

### BACKGROUND

Software development tools, such as an integrated development environment, often utilize a project to store a collection of related files that are compiled into an executable, library, web page, or web application. The project may include source code files, icons, images, data files, scripts that are used to build, edit, and debug code. The project may be stored in a source code repository that is shared by multiple developers.

A web service is an application that is accessible over the Internet through a standard web protocol (e.g., HTTP/HTTPS) which uses a standard messaging system for communications with other Internet-connected devices. A web service exposes one or more web endpoints where messages are sent. The web endpoint is where files or active server pages are exposed (e.g., JavaScript files, JSON files, HTML web pages, etc.).

At times, a security vulnerability may be traced to a web endpoint or to a source code file used in a web endpoint. To analyze the issue further, the identity of the source code files of the web endpoint or the identity of the web endpoints that utilize a particular source code file is needed to remedy the vulnerability. However, the location of the source code files used in a web endpoint or the identity of the web endpoints that utilize particular source code files may not be known. Often, there is no mechanism that correlates a web endpoint with the source code repository that stores the source code files exposed by the web endpoint or the web endpoints that utilize a particular source code file.
US 2020/153850 A1 relates to a centralized trust authority for web application components. The centralized trust authority also has the ability to absorb incremental changes over time through continuous updates with security characteristics of new objects and newly discovered security attributes of millions of existing objects. The component registration information comprises integrity hashes of each of the web resources provided by the producers of the web resources, lists of authorized host domains for each of the web resources, version release information for each of the web resources, such as version numbers, release notes, known issues, limitations, and any other relevant information. The computing system analyzes the plurality of web resources to determine unique identities and security attributes for each of the web resources.
CN 109 657 208 A relates to a webpage similarity calculating method, device, equipment, computer readable storage medium. The webpage similarity calculating method includes: the DOM tree for obtaining webpage to be compared, and carries out denoising to DOM tree the main structure label of DOM tree is selected from the DOM tree after denoising, rendering main structure label generates layout block; lateral division is carried out respectively according to the coordinate pair page layout format block to be compared of layout block, obtain N group comparison area block, kth group comparison area block includes the kth comparison area block of wherein the kth comparison area block of a webpage to be compared and corresponding another webpage to be compared, every group of two comparison area blocks are compared, the page structure similarity of every group of comparison area block is obtained, and the whole structure of web page similarity of two webpages to be compared is obtained according to the page structure similarity of N group comparison area block.

### SUMMARY

It is therefore the object of the present invention to improve the response time for remedying a security vulnerability.

This object is solved by the subject matter of the independent claims.

Preferred embodiments are defined by the dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

An automated tool is disclosed that analyzes source code repositories and web endpoints for unique characteristics that they both share in order to predict the likelihood that a particular source code repository contains source code files used in a web endpoint and to predict the likelihood that a web endpoint uses source code files of a particular repository. The unique characteristics are referred to as fingerprints and include unique combinations of public-facing entities, unique tokens, and unique DOM characteristics.

The unique characteristics are discovered using a static analysis component and a dynamic analysis component. The static analysis component scans the static version of source code files stored in a project of a source code repository and the dynamic analysis component scans the rendered versions found at the web endpoint and other content data of the web endpoint.

A correlation coefficient is computed for a source code repository and web endpoint pair which indicates the degree of similarity between the source code repository and the web endpoint based on the fingerprints of each partner of the pair. A high degree of similarity indicates a strong likelihood that the source code repository and the web endpoint are related.

The automated tool may be part of a security service that uses the correlation between source code repositories and web endpoints to detect the origin of a security vulnerability that may surface in a web endpoint or in a source code repository. The identification of the related web endpoint or source code repository improves the response time of the security service in remedying the security vulnerability.

These and other features and advantages will be apparent from a reading of the following detailed description and a review of the associated drawings. It is to be understood that both the foregoing general description and the following detailed description are explanatory only and are not restrictive of aspects as claimed.

### BRIEF DESCRIPTION OF DRAWINGS

Figs. 1A - 1B are block diagrams illustrating an exemplary system for detecting fingerprints from source code repositories and web endpoints which are used to generate correlation coefficients predicting the relationship between a source code repository and a web endpoint.
Figs. 2A-2B are block diagrams illustrating exemplary scenarios for utilizing the correlation coefficients.
Figs. 3A-3B are flow diagrams illustrating an exemplary method for analyzing source code repositories and web endpoints for fingerprints and to compute a correlation coefficient for a source code repository and web endpoint pair based on the fingerprints.
Figs. 4A and 4B are flow diagrams illustrating exemplary methods for utilizing the correlation coefficients.
Fig. 5 is a block diagram illustrating an exemplary operating environment.

### DETAILED DESCRIPTION

### Overview

The subject matter disclosed pertains to a mechanism that predicts the relationship between a static source code repository of a web application and its compiled and published version that is publicly-accessible on a web endpoint.

Software companies utilize tens of thousands of source code projects that are spread across multiple repositories and used in several web endpoints. Cataloguing a source code repository with the location of the web endpoints that utilize the source code files of a project within a repository and/or the source code repositories that store files used in a web endpoint is a challenging effort that is prone to human errors and is often outdated.

An automated tool is disclosed that analyzes source code repositories and web endpoints for unique characteristics that they both share in order to predict the likelihood that a particular source code repository contains source code files used in a web endpoint and to predict the likelihood that a web endpoint uses source code files of a particular repository. The unique characteristics are referred to as fingerprints and include unique combinations of public-facing entities, unique tokens, and unique DOM characteristics.

A public-facing entity is a library that contains source code that may be found in code used by a web endpoint. There are many widely-popular libraries but the existence of an individual public-facing entity is not unique enough. The combination of the public-facing entities found in a repository and web endpoint is a unique characteristic that is used as a fingerprint.

Tokens are static values or attribute-value pairs found in a source code file of a repository or web endpoint. DOM characteristics are attribute-value pairs found in the DOM of a rendered web page.

The unique characteristics are discovered using a static scanning process performed by a static analysis component and a dynamic scanning process performed by a dynamic analysis component. The static analysis component scans the static version of source code files stored in a project of a source code repository and the dynamic analysis component scans the rendered versions of these files and other content found at the web endpoint.

A correlation coefficient is computed for a source code repository and web endpoint pair which indicates the degree of similarity between the source code repository and the web endpoint based on the fingerprints found in each part of the pair. A high degree of similarity indicates a strong likelihood that the source code repository and the web endpoint are related.

The correlation or association between the source code repository and its use in a web endpoint may be used in different scenarios. The correlation aids in finding the source of a security vulnerability that may be hidden in a web endpoint or in related source code files stored in a source code repository. When a security vulnerability is found in an endpoint, knowledge of the origin of the security issue is crucial to resolving the issue and this requires knowing where the source code files of the web endpoint are located. Likewise, when a security vulnerability is found in source code file of a source code repository, knowledge of the web endpoints that utilize the faulty source code file is crucial to resolving the vulnerability.

Attention now turns to a further discussion of the system, devices, components, and methods utilized in the discovery of the correlation between source code repositories and web endpoints.

### System

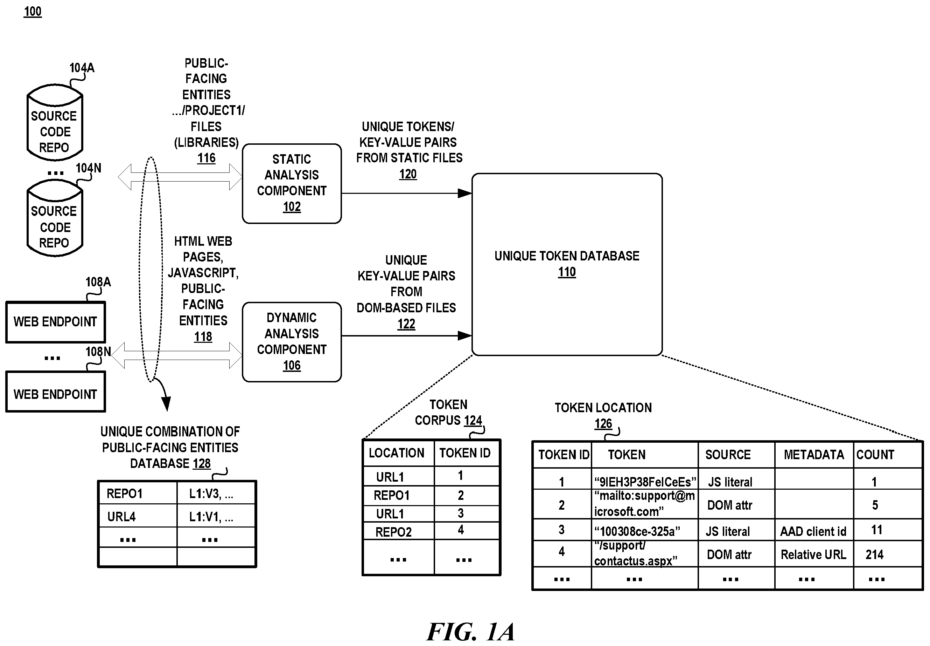

Figs. 1A - 1B illustrate an exemplary system 100 in which various aspects of the invention may be practiced. A static analysis component 102 performs a static analysis of the source code files in one or more source code repositories 104A-104N ("104") to find fingerprints, such as unique tokens, in each source code file of a source code repository and the combination of public-facing entities of a source code repository 116. The static analysis component 102 analyzes source code files written in a programming language, a text-based markup language (e.g., HTML/XML), scripting language (e.g., JavaScript), Cascading Style Sheet (CSS) files, configuration files, and so forth. The unique tokens found by the static analysis component 102 include unique static values and attribute-value pairs 120.

A dynamic analysis component 106 performs a dynamic analysis of the web content of a web endpoint 108A-108N ("108"). Dynamic analysis includes a combination of web crawling and webscraping since the content data of a web endpoint is rendered at runtime and differs from the static versions of the originating files. The dynamic content of a web endpoint includes URL patterns, JavaScript files, CSS files, web fonts, images, and downloadable public media 118. The unique tokens obtained from the dynamic content include string literals, file names, path names, DOM elements, and attribute-value pairs 122 which are stored in token database 110. In addition, the dynamic analysis component 106 identifies the unique combination of public-facing entities (e.g., libraries) 118 found at the web endpoint 108 which are stored in database 128.

A source code repository 104 is a file archive that hosts projects having source code files 116. The source code repository 104 may be private and internal to an organization, group, enterprise or user or may be publicly-accessible through the Internet. The source code repository 104 may include a version control system that manages changes made to the source code files. The source code repository 104 may be distributed or centralized. In a centralized source code repository, there is a single repository that contains all versions of the source code. There is one copy of the repository and a developer gets the latest copy of the source code from the centralized repository. Changes made by the developer are committed to the master copy in the centralized repository. In a distributed source code repository (e.g., GIT), each developer has their own local repository of the source code with the history and versions of the source code. The developer's changes are made to their local repository and then a set of changes is applied to the master repository.

In one aspect, a web endpoint 108 is accessed through one or more web APIs, such as a Representational State Transfer (REST) APIs. A REST API is used to initiate a request to a web endpoint, where the request specifies an HTTP operation or method to be performed to create, retrieve, update or delete a resource of the web service. The request may include a request Uniform Resource Identifier (URI) and a HTTP request message header. The URI may indicate the protocol used to transmit the request (e.g., http, https), the domain name or Internet Protocol (IP) address of the server of the REST service endpoint, the resource path and parameters. The HTTP request message header includes a HTTP method (e.g., GET, HEAD, PUT, POST, and PATCH methods) that tells the web service the type of operation that is being requested. The response may include a HTTP response message header and a HTTP response message body. The HTTP response message header may include a status code and other optional data. The HTTP response message body includes the requested data.

A token is a value of an element of the source code. In one aspect, a token is a literal that has a fixed value or an attribute value. For example, in the following JavaScript code,

```
         var instKey = "1111-22-33333-444444";
         callToFunction("#input_form", "VC23-162b");
  the tokens are the strings, "1111-22-33333-444444", "#input_form", and
 "VC23-162b", since they are fixed-valued literals.
```

In the following HTML code,

```
         <div id="main_screen_customer" class="fullscreen">...</ div>
         <script src="//mycdn.net/path/to/library.js?v=3" > </script>
  the tokens are the attribute values, "main_screen_customer", "fullscreen", and
 "mycdn.net/path/to/library.js?v=3".
```

A token may also be an attribute-value pair. In a webpage, some of the elements are HTML elements that contain a combination of attribute names and values. The values may not be unique but the combination of the attribute name and its value have a higher uniqueness. For this reason, a token includes attribute-value pairs which are a combination of an attribute name and its value. For example, for the following code snippet:

```
         <img name="title" rel="mask-icon" src="https://contoso.com" />,
  the tokens include the following attribute-value pairs: (1) name: "title", (2) rel:
 "mask-icon", and (3) src: "https://contoso.com".
```

A unique token is a token that has a high degree of randomization and has a significant length that makes it appear less frequently. To determine uniqueness, a token is stored in a token database 110 along with its location. A count is used to track the frequency the token appears in a particular source. If token appears too often, it not considered a unique token and is deleted from the token database.

In one aspect, the token database 110 may include a token corpus file 124 and a token location file 126. The token corpus file 124 contains the source of the token, which is either a source code repository name or a URL of a web endpoint (e.g., REP01, URL1, REP02), and a token identifier for the token. The token location file 126 includes the token identifier (e.g., 1, 2,...), the token, the source of the token (e.g., JS literal, DOM attr, etc.), metadata (e.g., when the token was first found, when the token was last found), and the count, which is the frequency that the token is discovered in a particular source.

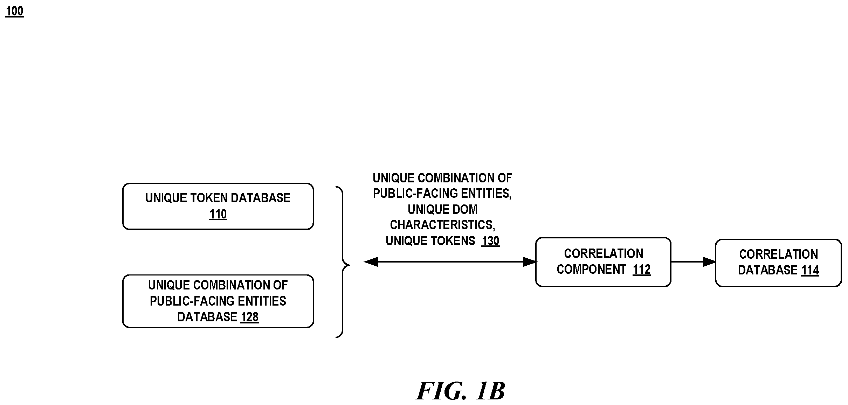

Turning to Fig. 1B, a correlation component 112 scans the token database 110 and the unique combination of public-facing entities database 128 to obtain the fingerprints which are the unique combination of public-facing entities, the unique DOM characteristics, and the unique tokens 130 used to compute a correlation coefficient that represents the likelihood that a particular web endpoint and source code repository are related. The correlation coefficients of a respective source code repository and web endpoint are stored in a coefficient database 114.

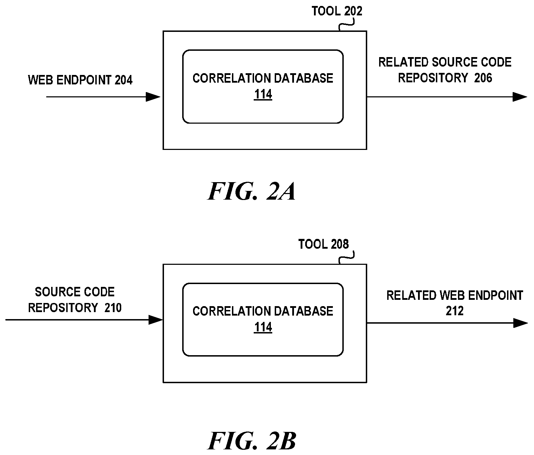

It should be noted that Figs. 1A-1B show components of the system in one aspect of an environment in which various aspects of the invention may be practiced. However, the exact configuration of the components shown in Figs. 1A-1B may not be required to practice the various aspects and variations in the configuration shown in Figs. 1A-1B and the type of components may be made without departing from the scope of the invention. Turning to Figs. 2A and 2B, the coefficient database 114 may be used in a tool 202 (e.g., software component, plug-in, add-in, etc.) to predict the source code repository that is related 206 to a web endpoint 204 by virtue of the fingerprints common to both the repository 206 and the web endpoint 204. Additionally, the coefficient database 114 may be used in a tool 208 to predict the web endpoint 212 related to a source code repository 210 by virtue of the web endpoint 212 exposing fingerprints originating from the repository 210. In one aspect, the tool may be part of an Integrated Development Environment. In other aspects, the tool may be integrated with a source code repository and used to track back snippets of source code or source code files to its original libraries or renaming libraries.

### Methods.

Attention now turns to a description of the various exemplary methods that utilize the system and devices disclosed herein. Operations for the aspects may be further described with reference to various exemplary methods. It may be appreciated that the representative methods do not necessarily have to be executed in the order presented, or in any particular order, unless otherwise indicated. Moreover, various activities described with respect to the methods can be executed in serial or parallel fashion, or any combination of serial and parallel operations. In one or more aspects, the method illustrates operations for the systems and devices disclosed herein.

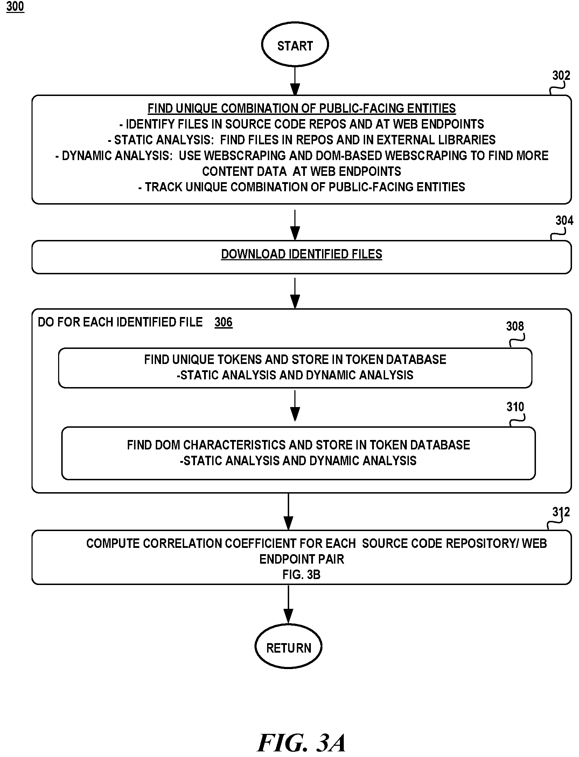

Figs. 3A-3B illustrate an exemplary method 300 for discovering the relationship between a source code repository and a web endpoint.

Turning to Fig. 3A, initially, the unique combination of public-facing entities is discovered. The static component searches for files that contain source code used in web applications. The dynamic component searches for the content data of a web endpoint. In one or more aspects, the method is pre-configured with a set of web endpoints to analyze and a number of source code repositories to analyze. (Collectively, block 302)

In addition to the known source code repositories, the static component searches for external libraires or public-facing entities that are used in web applications. Web-based projects rely on a number of public-facing entities to provide client-side functionality and visual components which may be contained in JavaScript libraries, Cascade Style Sheet (CSS) files, web fonts, images and the like. The public-facing entities may be found in well-known open source libraries, such as React, Vue, JQuery, Google Analytics, etc. (Collectively, block 302).

The location of the public-facing entities may not be known. In this case, the static component may search package managers associated with a web application framework to find these external libraries. A web application framework is a collection of resources that support the development of web applications, web APIs, and web services. A web application framework may include a package manager that automates the process of installing, upgrading, configuring, and removing computer programs for a computer's operating system in a consistent manner. The package managers include libraries having source code used for web application development. (Collectively, block 302).

The dynamic component analyzes the content data of a web endpoint. To find the content data of a web endpoint, webscraping techniques are used. Classic webscraping involves fetching a web page from a website and then extracting from it content and additional web pages. Web pages are constructed from text-based markup languages, such as HTML, XML and XHTML, and contain content data in text form which can be readily extracted from the web page. Hyperlinks and references to external-facing entities can be extracted from the markup language files. (Collectively, block 302)

At some web endpoints, single page applications are used which rely on JavaScript and API calls to form the content of a web page dynamically thereby rendering additional files and libraries. These files and libraries would not be detected from classic webscraping. In this scenario, DOM-based scraping is used to find these external-facing entities (e.g., JavaScript file and libraries) and to follow hyperlinks. DOM-based scraping builds the DOM and executes the scripts located in the HTML source code. Data is then extracted from the DOM with selectors. DOM-based scraping is performed using a headless browser. (Collectively, block 302).

The files in these external libraries and the files in the source code repository are downloaded for further analysis by the static component and the content data of the web endpoints are downloaded as well. The unique combination of the files of a source code repository and web endpoint are stored in a database for further analysis. (Collectively, block 304).

Each of the downloaded files are then analyzed for unique tokens and DOM characteristics. The static component analyzes the static files, such as the source code files from a source code repository and the dynamic component analyzes the DOM elements in the DOM of a rendered web page. The DOM is a data representation of the objects that comprise the structure and content of a web page. The DOM is modified with a scripting language, such as JavaScript. (Collectively, block 306).

The static component may parse the source code file into a parse tree or abstract syntax tree to extract the literals in the source code file that represent static values. The dynamic component analyzes the DOM of a rendered web page to identify attribute-value pairs from the DOM elements of the web page. (Collectively, block 308).

The unique tokens are then stored in the token database. In one aspect, the token database is composed of a token corpus segment and a token location segment. The token corpus segment identifies the location of a token and an identifier for the token. The token location segment includes the token identifier, the token, the token type, the token's metadata, and the count of the number of times the token is found. (Collectively, block 310).

After all the identified files are mined, the correlation component computes a correlation coefficient for each source code repository and web endpoint pair which is stored in the correlation database (block 312).

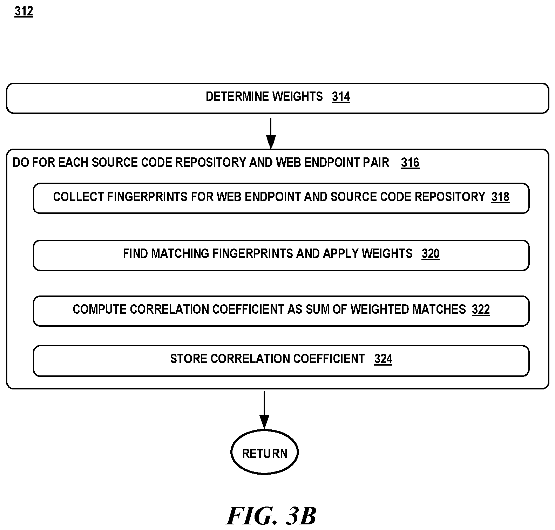

Referring to Fig. 3B, in one aspect, the correlation coefficient is computed as a weighted sum of matched fingerprints. The weights are configured initially to accommodate a target goal. In one aspect, the weights are used to give importance to certain fingerprints over other fingerprints. For example, unique tokens are given a higher weight since they are more unique than the combination of publicly-facing entities. The weight of a token may represent the uniqueness of the token. In one aspect, the weight of a token may be the ratio of the size of the token corpus over the frequency of the token. In this manner, a higher weight is given to a token that occurs less frequently and deemed very unique. (Collectively, block 314).

The correlation component computes a correlation coefficient for each source code repository and web endpoint pair (block 316). Initially, the fingerprints for the web endpoint and source code repository of the pair are collected (block 318).

The correlation component looks for matches between the fingerprints of a web endpoint and a source code repository. For tokens, a match is when the value of the one token is identical to the value of another token. For a public-facing entity, a match is when the same library is found in both fingerprints and the version of a matched library is at least the same version or more recent as the other matched library. For each matched fingerprint, a respective weight is applied to the match. (Collectively, block 320).

The correlation component then computes the correlation coefficient for the source code repository and web endpoint pair as the sum of the weights of each matched fingerprint. In one aspect, the correlation coefficient is interpreted as a high value when the correlation coefficient exceeds a threshold value and is a low value when the correlation coefficient is less than the threshold value. A high value indicates that the source code repository and web endpoint are related. (Collectively, block 322).

For example, consider the source code repository, REPO, and web endpoint, EP. The fingerprints for REPO are listed in the vector, REPO = [L0:v1, L1:v1, L2:v1, L3:v2, T0, T2, D:[d1,d2] ] and the fingerprints for EP are listed in the vector EP = [L0:v1, L1:v1, L2:v2, T0, T1, T2, D:[d1,d2,d3] ]. The fingerprints for REPO include version v1 of library L0, version v1 of library L1, version 1 of library L2, version v2 of library L3, tokens T0, T2, and DOM attribute-value pairs, d1 and d2. The fingerprints for EP include version v1 of library L0, version v1 for library L1, version v2 of library L2, tokens T0, T1, T2, and DOM attribute-value pairs, d1, d2 and d3.

In this example, there are 7 matches which are as follows:
Match1 = {REPO, EP, L0} (REPO and EP share the same library since they both use the same version of library L0),
Match2 = {REPO, EP, L1} (REPO and EP share the same library since they both use the same version of library L1),
Match3 = {REPO, EP, L2} (REPO uses an older version of library L2 and EP uses a newer version of library L2 which is considered a match),
Match4 ={REPO, EP, T0} (REPO and EP both share the token T0),
Match5 = {REPO, EP, T2} (REPO and EP both share the token T2),
Match6 = {REPO, EP, d1} (REPO and EP both share the DOM attribute-value pair d1), and
Match7 = {REPO, EP, d2} (REPO and EP both share the DOM attribute-value pair d2).

The correlation coefficient, CC, for REPO, EP is the following sum of the weights of each match:
CC = (Match1 * 1) + (Match2 * 1) + (Match3 * 1) + (Match4 * Weight1) + (Match5 * Weight2) + (Match6 * Weight3) + (Match7 * Weight4). The value of each match, Match1, Match2, Match3, ... Match7, is one.

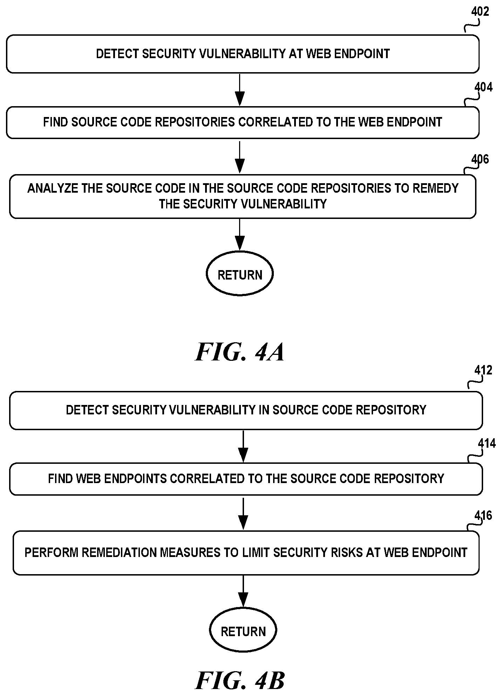

Attention now turns to the application of the correlation coefficients. Turning to Figs. 4A and 4B, in one aspect, the correlation database may be used in a security service to detect the source of a security vulnerability or to detect the outcome of a security vulnerability. A security vulnerability may be detected using a security analysis tool. For example, web vulnerabilities may be found using Static Analysis Security Testing (SAST) or Dynamic Analysis Security Testing (DAST). SAST is a testing methodology that analyzes source code before it is compiled to detect potential security vulnerabilities. DAST is a testing methodology that finds potential security vulnerabilities in web applications while running in production mode.

Upon detection of a security vulnerability at a web endpoint (block 402), the correlation database is used to locate the source code repositories having a high correlation coefficient with a web endpoint (block 404) in order to analyze the source of the security vulnerability in the identified source code repositories (block 406).

Upon detection of a security vulnerability in source code of a source code repository (block 412), the correlation database is used to find web endpoints having a high correlation coefficient with the source code repository (block 414), in order to perform remediation measures to limit the security risks at the web endpoint (block 416).

### Exemplary Operating Environment

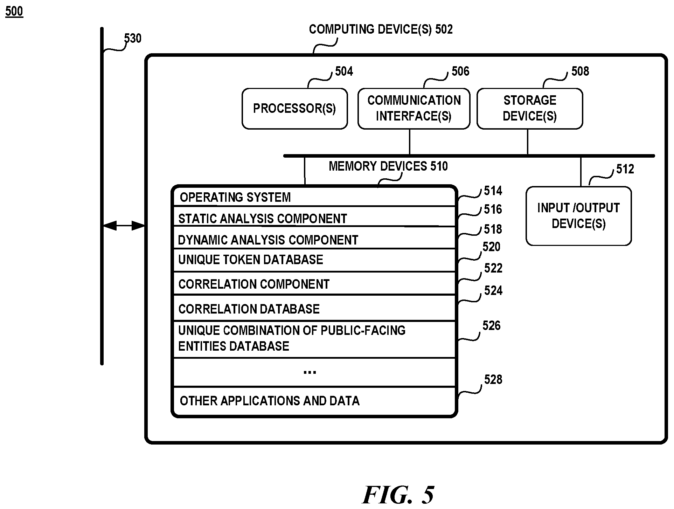

Attention now turns to a discussion of an exemplary operating environment. Fig. 5 illustrates an exemplary operating environment 500 having one or more computing devices 502 used to find a correlation between a source code repository and a web endpoint. However, it should be noted that the aspects disclosed herein is not constrained to any particular configuration of devices. It should be noted that the operating environment is not limited to any particular configuration and other configurations are possible.

A computing device 502 may be any type of electronic device, such as, without limitation, a mobile device, a personal digital assistant, a mobile computing device, a smart phone, a cellular telephone, a handheld computer, a server, a server array or server farm, a web server, a network server, a blade server, an Internet server, a work station, a minicomputer, a mainframe computer, a supercomputer, a network appliance, a web appliance, an Internet-of-Things (IOT) device, a distributed computing system, multiprocessor systems, or combination thereof. The operating environment 500 may be configured in a network environment, a distributed environment, a multi-processor environment, or as a combination of one or more stand-alone computing devices having access to remote or local storage devices.

A computing device 502 may include one or more processors 504, one or more communication interfaces 506, one or more storage devices 508, one or more input/output devices 512, and one or more memory devices 510. A processor 504 may be any commercially available central processing unit (CPU), microprocessor, processor core, or customized processor and may include dual microprocessors and multi-processor architectures. The communication interface 506 facilitates wired or wireless communications between the computing device 502 and other devices. A storage device 508 may be computer-readable medium that does not contain propagating signals, such as modulated data signals transmitted through a carrier wave. Examples of a storage device 508 include without limitation RAM, ROM, EEPROM, flash memory or other memory technology, CD-ROM, digital versatile disks (DVD), or other optical storage, magnetic cassettes, magnetic tape, magnetic disk storage, all of which do not contain propagating signals, such as modulated data signals transmitted through a carrier wave. There may be multiple storage devices 508 in the computing device 502. The input/output devices 512 may include a keyboard, mouse, pen, voice input device, touch input device, display, speakers, printers, etc., and any combination thereof.

A memory 510 may be any non-transitory computer-readable storage media that may store executable procedures, applications, and data. The computer-readable storage media does not pertain to propagated signals, such as modulated data signals transmitted through a carrier wave. It may be any type of non-transitory memory device (e.g., random access memory, read-only memory, etc.), magnetic storage, volatile storage, non-volatile storage, optical storage, DVD, CD, floppy disk drive, etc. that does not pertain to propagated signals, such as modulated data signals transmitted through a carrier wave. A memory 510 may also include one or more external storage devices or remotely located storage devices that do not pertain to propagated signals, such as modulated data signals transmitted through a carrier wave. The memory 510 may include an operating system 514, a static analysis component 516, a dynamic analysis component 518, a unique token database 520, a correlation component 522, a correlation database 524, a unique combination of public-facing entities database 526, and other applications and data 528.

The computing device 502 may be communicatively coupled to a network 530. The network 530 may be configured as an ad hoc network, an intranet, an extranet, a virtual private network (VPN), a local area network (LAN), a wireless LAN (WLAN), a wide area network (WAN), a wireless WAN (WWAN), a metropolitan network (MAN), the Internet, portions of the Public Switched Telephone Network (PSTN), plain old telephone service (POTS) network, a wireless network, a WiFi^{®} network, or any other type of network or combination of networks.

The network 530 may employ a variety of wired and/or wireless communication protocols and/or technologies. Various generations of different communication protocols and/or technologies that may be employed by a network may include, without limitation, Global System for Mobile Communication (GSM), General Packet Radio Services (GPRS), Enhanced Data GSM Environment (EDGE), Code Division Multiple Access (CDMA), Wideband Code Division Multiple Access (W-CDMA), Code Division Multiple Access 2000, (CDMA-2000), High Speed Downlink Packet Access (HSDPA), Long Term Evolution (LTE), Universal Mobile Telecommunications System (UMTS), Evolution-Data Optimized (Ev-DO), Worldwide Interoperability for Microwave Access (WiMax), Time Division Multiple Access (TDMA), Orthogonal Frequency Division Multiplexing (OFDM), Ultra Wide Band (UWB), Wireless Application Protocol (WAP), User Datagram Protocol (UDP), Transmission Control Protocol/ Internet Protocol (TCP/IP), any portion of the Open Systems Interconnection (OSI) model protocols, Session Initiated Protocol/ Real-Time Transport Protocol (SIP/RTP), Short Message Service (SMS), Multimedia Messaging Service (MMS), or any other communication protocols and/or technologies.

### Conclusion

A system is disclosed comprising: one or more processors; and a memory; one or more programs, wherein the one or more programs are stored in the memory and are configured to be executed by the one or more processors, the one or more programs including instructions that: find fingerprints of a source code repository, wherein the fingerprints of the source code repository include at least one of a unique combination of public-facing entities of the source code repository, unique tokens of the source code repository, or unique Document Object Model (DOM) characteristics of the source code repository; find fingerprints of a web endpoint, wherein the fingerprints of the web endpoint include at least one of a unique combination of public-facing entities of the web endpoint, unique tokens of the web endpoint, or unique DOM characteristics of the web endpoint; relate, the source code repository with the web endpoint and/or the web endpoint with the source code repository, upon a high correlation detected between the fingerprints of the source code repository and the fingerprints of the web endpoint; upon detection of a security vulnerability with the web endpoint, identify the related source code repository; and upon detection of a security vulnerability with the source code repository, identify the related web endpoint.

In one aspect, the one or more programs include further instructions that: identity the unique combination of public-facing entities of the web endpoint through DOM webscraping. In one aspect, the one or more programs include further instructions that: identify the unique combination of public-facing entities of the source code repository through package managers. In one or more aspects, the unique tokens of the source code repository include static values of source code files of the source code repository and the unique tokens of the web endpoint include attribute-value pairs of a rendered web page.

In an aspect, the one or more programs include further instructions that: apply a weight to each fingerprint of the web endpoint and to each fingerprint of the source code repository; and identify a relationship between the source code repository and the web endpoint based on a weighted sum of fingerprints of the source code repository that match fingerprints of the web endpoint. In an aspect, the weight of a unique token of the source code repository and a unique token of the web endpoint is based on frequency of occurrence of a value of the unique token.

A method is disclosed that is performed on a computing device having a processor and a memory. The method comprising: identifying a relationship between a web endpoint and a source code repository based on fingerprints of the source code repository matching fingerprints of the web endpoint, wherein the fingerprints of the source code repository include unique tokens found in source code files of the source code repository, wherein the fingerprints of the web endpoint include unique tokens found in dynamic content of the web endpoint; upon detection of a security vulnerability with the source code repository, obtaining the related web endpoint for analysis of the security vulnerability with the related web endpoint; and upon detection of a security vulnerability with the web endpoint, obtaining the related source code repository for analysis of the security vulnerability with the related source code repository.

In an aspect, the fingerprints of the source code repository include unique combinations of publicly-facing entities of the source code repository, wherein the fingerprints of the web endpoint include unique combinations of public-facing entities of the web endpoint. In an aspect, the dynamic content of the web endpoint includes attribute-value pairs of a rendered web page of the web endpoint.

In one or more aspects, the method further comprises applying a weight to each unique token of the source code repository and each unique token of the web endpoint; computing a correlation coefficient based on unique tokens of the source code repository matching unique tokens of the web endpoint; and relating the web endpoint to the source code repository based on the correlation coefficient. In one or more aspects, the method further comprises generating the weight of each unique token based on a frequency of occurrence of a unique token.

In an aspect, the method further comprises applying a weight to each fingerprint of the source code repository and to each fingerprint of the web endpoint; and establishing a relationship between the web endpoint and the source code repository based on a weighted sum of matched fingerprints. In an aspect, the method further comprises: matching a combination of publicly-facing entities based on a version of a publicly-facing entity of the source code repository matching a same or later version of a same publicly-facing entity of the web endpoint. In an aspect, the unique tokens of the source code repository are static values, wherein the unique tokens of the web endpoint are attribute-value pairs of a Document Object Model (DOM) element.

A device is disclosed comprising: a processor coupled to a memory; wherein the processor is configured to execute instructions stored in the memory that perform acts that: aggregate unique tokens found in source code files of a source code repository and unique tokens found in content of a web endpoint; compute a correlation coefficient for the source code repository and the web endpoint, wherein a high correlation coefficient represents an association between the source code repository and the web endpoint, wherein the correlation coefficient is based on a number of matches between the unique tokens of the source code repository and the unique tokens of the web endpoint; and upon detection of a security vulnerability with the source code repository or the web endpoint, use the correlation coefficient of the source code repository or the web endpoint to find a related source code repository or related web endpoint.

In an aspect, the processor is configured to execute instructions stored in the memory to perform acts that: aggregate public-facing entities of the source code files of the source code repository and public-facing entities of the web endpoint; and wherein the computation of the correlation coefficient is based further on a number of matches of the public-facing entities of the source code repository with the public-facing entities of the web endpoint.

In an aspect, the processor is configured to execute instructions stored in the memory to perform acts that: aggregate attribute-value pairs from Document Object Model (DOM) elements of a rendered web page of the web endpoint and attribute-values pairs of DOM elements of a source code repository; and wherein the computation of the correlation coefficient is based further on a number of matches of the attribute-value pairs of a web endpoint with the attribute-value pairs of the source code repository.

In an aspect, the processor is configured to execute instructions stored in the memory to perform acts that: apply a weight to each unique token; and wherein the computation of the correlation coefficient is a weighted sum of the matches between the unique tokens of the source code repository and the unique tokens of the web endpoint. The processor is further configured to execute instructions stored in the memory to perform acts that: apply a weight to each public-facing entity; and wherein the computation of the correlation coefficient is a weighted sum of the matches between the unique tokens of the source code repository and the unique tokens of the web endpoint and matches between the unique combination of public-facing entities of the source code repository and the public-facing entities of the web endpoint.

While this specification contains many specific implementation details, these should not be construed as limitations on the scope of what may be claimed, but rather as descriptions of features that may be specific to particular implementations. Certain features that are described in this specification in the context of separate embodiments may also be implemented in combination in a single embodiment. Conversely, various features that are described in the context of a single embodiment may also be implemented in multiple embodiments separately or in any suitable sub-combination. Moreover, although features may be described above as acting in certain combinations and even initially claimed as such, one or more features from a claimed combination may in some cases be excised from the combination, and the combination may be directed to a sub-combination or variation of a sub-combination.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A system comprising:
one or more processors (504); and a memory (510);
one or more programs, wherein the one or more programs are stored in the memory and are configured to be executed by the one or more processors, the one or more programs including instructions that:
find fingerprints of a source code repository (210), wherein the fingerprints of the source code repository include a unique combination of public-facing entities of the source code repository, unique tokens of the source code repository, and unique Document Object Model, DOM, characteristics of the source code repository;
find fingerprints of a web endpoint (204), wherein the fingerprints of the web endpoint include a unique combination of public-facing entities of the web endpoint, unique tokens of the web endpoint, and unique DOM characteristics of the web endpoint;
relate, the source code repository with the web endpoint and/or the web endpoint with the source code repository, upon a high correlation detected between the fingerprints of the source code repository and the fingerprints of the web endpoint;
upon detection (402) of a security vulnerability with the web endpoint, identify (404) the related source code repository; and
upon detection (412) of a security vulnerability with the source code repository, identify (414) the related web endpoint.

2. The system of claim 1, wherein the one or more programs include further instructions that:
identity the unique combination of public-facing entities of the web endpoint through DOM webscraping.

3. The system of claim 1, wherein the one or more programs include further instructions that:
identify the unique combination of public-facing entities of the source code repository through package managers.

4. The system of claim 1, wherein the unique tokens of the source code repository include static values of source code files of the source code repository.

5. The system of claim 1, wherein the unique tokens of the web endpoint include attribute-value pairs of a rendered web page.

6. The system of claim 1, wherein the one or more programs include further instructions that:
apply a weight to each fingerprint of the web endpoint and to each fingerprint of the source code repository; and
identify a relationship between the source code repository and the web endpoint based on a weighted sum of fingerprints of the source code repository that match fingerprints of the web endpoint.

7. The system of claim 6, wherein the weight of a unique token of the source code repository and a unique token of the web endpoint is based on frequency of occurrence of a value of the unique token.

8. A method, performed on a computing device having a processor and a memory, the method comprising:
identifying a relationship between a web endpoint (204) and a source code repository (210) based on fingerprints of the source code repository matching fingerprints of the web endpoint, wherein the fingerprints of the source code repository include a unique combination of public-facing entities of the source code repository, unique tokens found in source code files of the source code repository and unique Document Object Model, DOM, characteristics of the source code repository, wherein the fingerprints of the web endpoint include a unique combination of public-facing entities of the web endpoint, unique tokens found in dynamic content of the web endpoint, and unique DOM characteristics of the web endpoint;
upon detection (412) of a security vulnerability with the source code repository, obtaining (414) the related web endpoint for analysis of the security vulnerability with the related web endpoint; and
upon detection (402) of a security vulnerability with the web endpoint, obtaining (404) the related source code repository for analysis of the security vulnerability with the related source code repository.

9. The method of claim 8, wherein the dynamic content of the web endpoint includes attribute-value pairs of a rendered web page of the web endpoint.

10. The method of claim 8, further comprising:
applying a weight to each unique token of the source code repository and each unique token of the web endpoint;
computing a correlation coefficient based on unique tokens of the source code repository matching unique tokens of the web endpoint; and
relating the web endpoint to the source code repository based on the correlation coefficient.

11. The method of claim 10, further comprising:
generating the weight of each unique token based on a frequency of occurrence of a unique token.

12. The method of claim 8, further comprising:
applying a weight to each fingerprint of the source code repository and to each fingerprint of the web endpoint; and
establishing a relationship between the web endpoint and the source code repository based on a weighted sum of matched fingerprints.

13. The method of claim 8, further comprising:
matching a combination of publicly-facing entities based on a version of a publicly-facing entity of the source code repository matching a same or later version of a same publicly-facing entity of the web endpoint.

14. The method of claim 8, wherein the unique tokens of the source code repository are static values, wherein the unique tokens of the web endpoint are attribute-value pairs of a Document Object Model, DOM, element.

## Patentansprüche

1. System, umfassend:
einen oder mehrere Prozessoren (504); und einen Speicher (510);
ein oder mehrere Programme, wobei das eine oder die mehreren Programme in dem Speicher gespeichert und dazu eingerichtet sind, von dem einen oder den mehreren Prozessoren ausgeführt zu werden, wobei das eine oder die mehreren Programme Anweisungen enthalten, die:
Fingerabdrücke eines Quellcode-Repositorys (210) ermitteln, wobei die Fingerabdrücke des Quellcode-Repositorys eine eindeutige Kombination aus öffentlich zugänglichen Entitäten des Quellcode-Repositorys, eindeutigen Tokens des Quellcode-Repositorys und eindeutigen DOM-Merkmalen (DOM - Document Object Model) des Quellcode-Repositorys umfassen;
Fingerabdrücke eines Web-Endpunktes (204) ermitteln, wobei die Fingerabdrücke des Web-Endpunktes eine eindeutige Kombination aus öffentlich zugänglichen Entitäten des Web-Endpunktes, eindeutigen Tokens des Web-Endpunktes und eindeutigen DOM-Merkmalen des Web-Endpunktes umfassen;
das Quellcode-Repository mit dem Web-Endpunkt und/oder den Web-Endpunkt mit dem Quellcode-Repository in Beziehung setzen, sobald eine hohe Korrelation zwischen den Fingerabdrücken des Quellcode-Repositorys und den Fingerabdrücken des Web-Endpunktes erfasst wird;
bei Erfassung (402) einer Sicherheitslücke bei dem Web-Endpunkt, Identifizieren (404) des zugehörigen Quellcode-Repositorys; und
bei Erfassung (412) einer Sicherheitslücke in dem Quellcode-Repository, Identifizieren (414) des zugehörigen Web-Endpunktes.

2. System nach Anspruch 1, bei dem das eine oder die mehreren Programme weitere Anweisungen umfassen, die:
die eindeutige Kombination öffentlich zugänglicher Entitäten des Web-Endpunktes durch DOM-Webscraping identifizieren.

3. System nach Anspruch 1, bei dem das eine oder die mehreren Programme weitere Anweisungen umfassen, die:
die eindeutige Kombination öffentlich zugänglicher Entitäten des Quellcode-Repositorys über Paketmanager identifizieren.

4. System nach Anspruch 1, bei dem die eindeutigen Token des Quellcode-Repositorys statische Werte von Quellcode-Dateien des Quellcode-Repositorys umfassen.

5. System nach Anspruch 1, bei dem die eindeutigen Token des Web-Endpunktes Attribut-Wert-Paare einer dargestellten Webseite umfassen.

6. System nach Anspruch 1, bei dem das eine oder die mehreren Programme weitere Anweisungen umfassen, die:
auf jeden Fingerabdruck des Web-Endpunktes und jeden Fingerabdruck des Quellcode-Repositorys eine Gewichtung anwenden; und
eine Beziehung zwischen dem Quellcode-Repository und dem Web-Endpunkt auf der Grundlage einer gewichteten Summe von Fingerabdrücken des Quellcode-Repositorys identifizieren, die mit Fingerabdrücken des Web-Endpunktes übereinstimmen.

7. System nach Anspruch 6, bei dem die Gewichtung eines eindeutigen Tokens des Quellcode-Repositorys und eines eindeutigen Tokens des Web-Endpunktes auf der Häufigkeit des Vorkommens eines Wertes des eindeutigen Tokens basiert.

8. Verfahren, das auf einer Computervorrichtung mit einem Prozessor und einem Speicher ausgeführt wird, wobei das Verfahren umfasst:
Identifizieren einer Beziehung zwischen einem Web-Endpunkt (204) und einem Quellcode-Repository (210) auf der Grundlage von Fingerabdrücken des Quellcode-Repositorys, die mit Fingerabdrücken des Web-Endpunktes übereinstimmen, wobei die Fingerabdrücke des Quellcode-Repositorys eine eindeutige Kombination aus öffentlich zugänglichen Entitäten des Quellcode-Repositorys, eindeutigen Tokens, die in Quellcodedateien des Quellcode-Repositorys ermittelt werden, und eindeutigen DOM-Merkmalen (DOM - Document Object Model) des Quellcode-Repositorys umfassen und die Fingerabdrücke des Web-Endpunktes eine eindeutige Kombination aus öffentlich zugänglichen Entitäten des Web-Endpunktes, eindeutigen Tokens, die in dynamischen Inhalten des Web-Endpunktes ermittelt werden, und eindeutigen DOM-Merkmalen des Web-Endpunktes umfassen;
bei Erfassung (412) einer Sicherheitslücke in dem Quellcode-Repository, Abrufen (414) des zugehörigen Web-Endpunktes, um die Sicherheitslücke anhand des zugehörigen Web-Endpunktes zu analysieren; und
bei Erfassung (402) einer Sicherheitslücke in dem Web-Endpunkt, Abrufen (404) des zugehörigen Quellcode-Repositorys, um die Sicherheitslücke anhand des zugehörigen Quellcode-Repositorys zu analysieren.

9. Verfahren nach Anspruch 8, bei dem der dynamische Inhalt des Web-Endpunktes Attribut-Wert-Paare einer dargestellten Webseite des Web-Endpunktes umfasst.

10. Verfahren nach Anspruch 8, weiterhin umfassend:
Anwenden einer Gewichtung auf jeden eindeutigen Token des Quellcode-Repositorys und jeden eindeutigen Token des Web-Endpunktes;
Berechnen eines Korrelationskoeffizienten auf der Grundlage der Übereinstimmung von eindeutigen Tokens des Quellcode-Repositorys mit eindeutigen Tokens des Web-Endpunktes; und
in Beziehung setzen des Web-Endpunktes zu dem Quellcode-Repository auf der Grundlage des Korrelationskoeffizienten.

11. Verfahren nach Anspruch 10, weiterhin umfassend:
Erzeugen der Gewichtung jedes eindeutigen Tokens auf der Grundlage der Häufigkeit des Auftretens eines eindeutigen Tokens.

12. Verfahren nach Anspruch 8, weiterhin umfassend:
Anwenden einer Gewichtung auf jeden Fingerabdruck des Quellcode-Repositorys und jeden Fingerabdruck des Web-Endpunktes; und
Herstellen einer Beziehung zwischen dem Web-Endpunkt und dem Quellcode-Repository auf der Grundlage einer gewichteten Summe übereinstimmender Fingerabdrücke.

13. Verfahren nach Anspruch 8, weiterhin umfassend:
Abgleichen einer Kombination öffentlich zugänglicher Entitäten auf der Grundlage, dass eine Version einer öffentlich zugänglichen Entität des Quellcode-Repositorys mit einer gleichen oder späteren Version derselben öffentlich zugänglichen Entität des Web-Endpunktes übereinstimmt.

14. Verfahren nach Anspruch 8, bei dem die eindeutigen Token des Quellcode-Repositorys statische Werte sind, wobei die eindeutigen Token des Web-Endpunktes Attribut-Wert-Paare eines DOM-Elements (DOM - Document Object Model) sind.

## Revendications

1. Système comprenant:
un ou plusieurs processeurs (504); et une mémoire (510);
un ou plusieurs programmes, lesdits un ou plusieurs programmes étant stockés dans la mémoire et configurés pour être exécutés par le ou les processeurs, lesdits un ou plusieurs programmes comprenant des instructions qui:
recherchent les empreintes d'un référentiel de code source (210), les empreintes du référentiel de code source comprenant une combinaison unique d'entités accessibles au public du référentiel de code source, de jetons uniques du référentiel de code source et de caractéristiques uniques du modèle objet de document (DOM) du référentiel de code source;
identifient les empreintes d'un point de terminaison Web (204), les empreintes du point de terminaison Web comprenant une combinaison unique d'entités accessibles au public du point de terminaison Web, de jetons uniques du point de terminaison Web et de caractéristiques uniques du DOM du point de terminaison Web;
établissent un lien entre le référentiel de code source et le point de terminaison Web et/ou entre le point de terminaison Web et le référentiel de code source, lorsqu'une forte corrélation est détectée entre les empreintes du référentiel de code source et celles du point de terminaison Web;
lors de la détection (402) d'une faille de sécurité au niveau du point de terminaison Web, identifient (404) le référentiel de code source associé; et
lors de la détection (412) d'une faille de sécurité au niveau du dépôt de code source, identifient (414) le point de terminaison Web associé.

2. Système selon la revendication 1, dans lequel le ou les programmes comprennent en outre des instructions qui:
identifient la combinaison unique d'entités accessibles au public du point de terminaison Web par le biais d'un moissonnage Web DOM.

3. Système selon la revendication 1, dans lequel le ou les programmes comprennent en outre des instructions qui:
identifient la combinaison unique d'entités accessibles au public du dépôt de code source via des gestionnaires de paquets.

4. Système selon la revendication 1, dans lequel les jetons uniques du référentiel de code source comprennent des valeurs statiques de fichiers de code source du référentiel de code source.

5. Système selon la revendication 1, dans lequel les jetons uniques du point de terminaison Web comprennent des paires attribut-valeur d'une page Web affichée.

6. Système selon la revendication 1, dans lequel le ou les programmes comprennent en outre des instructions qui:
appliquent un poids à chaque empreinte du point de terminaison Web et à chaque empreinte du référentiel de code source; et
identifient une relation entre le référentiel de code source et le point de terminaison Web sur la base d'une somme pondérée des empreintes du référentiel de code source qui correspondent aux empreintes du point de terminaison Web.

7. Système selon la revendication 6, dans lequel la pondération d'un jeton unique du référentiel de code source et d'un jeton unique du point de terminaison Web est fondée sur la fréquence d'occurrence d'une valeur du jeton unique.

8. Procédé, mis en œuvre sur un dispositif informatique comportant un processeur et une mémoire, le procédé comprenant:
l'identification d'une relation entre un point de terminaison Web (204) et un référentiel de code source (210) sur la base de l'adéquation entre les empreintes du référentiel de code source et celles du point de terminaison Web, les empreintes du référentiel de code source comprenant une combinaison unique d'entités accessibles au public du référentiel de code source, de jetons uniques présents dans les fichiers de code source du référentiel de code source et de caractéristiques uniques du Modèle d'objet de document, DOM, ainsi que des caractéristiques du référentiel de code source, les empreintes du point de terminaison Web comprenant quant à elles une combinaison unique d'entités accessibles au public du point de terminaison Web, de jetons uniques présents dans le contenu dynamique du point de terminaison Web et de caractéristiques DOM uniques du point de terminaison Web;
lors de la détection (412) d'une faille de sécurité au niveau du dépôt de code source, obtenir (414) le point de terminaison Web associé afin d'analyser la faille de sécurité au niveau de ce point de terminaison Web; et
lors de la détection (402) d'une faille de sécurité au niveau du point de terminaison Web, l'obtention (404) du référentiel de code source associé en vue de l'analyse de la faille de sécurité à l'aide dudit référentiel de code source associé.

9. Procédé selon la revendication 8, dans lequel le contenu dynamique du point de terminaison Web comprend des paires attribut-valeur d'une page Web affichée du point de terminaison Web.

10. Procédé selon la revendication 8, comprenant en outre:
l'application d'un poids à chaque jeton unique du référentiel de code source et à chaque jeton unique du point de terminaison Web;
le calcul d'un coefficient de corrélation sur la base de la correspondance entre les jetons uniques du référentiel de code source et les jetons uniques du point de terminaison Web; et
la mise en relation du point de terminaison Web avec le référentiel de code source sur la base du coefficient de corrélation.

11. Procédé selon la revendication 10, comprenant en outre :
la gestion du poids de chaque jeton unique en fonction de la fréquence d'occurrence d'un jeton unique.

12. Procédé selon la revendication 8, comprenant en outre :
l'application d'un poids à chaque empreinte du référentiel de code source et à chaque empreinte du point de terminaison Web; et
l'établissement d'une relation entre le point de terminaison Web et le référentiel de code source sur la base d'une somme pondérée des empreintes correspondantes.

13. Procédé selon la revendication 8, comprenant en outre:
la mise en correspondance d'une combinaison d'entités accessibles au public en fonction d'une version d'une entité accessible au public du référentiel de code source correspondant à une version identique ou ultérieure d'une même entité accessible au public du point de terminaison Web.

14. Procédé selon la revendication 8, dans lequel les jetons uniques du référentiel de code source sont des valeurs statiques, et dans lequel les jetons uniques du point de terminaison Web sont des paires attribut-valeur d'un élément du Modèle d'objet de document (DOM).
